# EUROPÄISCHE PATENTSCHRIFT

(11) **EP 3 041 731 B1**
(45) Veröffentlichungstag und Bekanntmachung des Hinweises auf die Patenterteilung: **04.04.2018**
(21) Anmeldenummer: 14755638.5
(22) Anmeldetag: 19.08.2014
(51) Int. Cl.: B62D 29/04

(54) **FASER-VERBUND-KUNSTSTOFFBAUTEIL UND HERSTELLUNGSVERFAHREN**
FIBER-COMPOSITE PLASTIC COMPONENT AND PRODUCTION PROCESS
ÉLÉMENT DE CONSTRUCTION COMPOSITE EN MATÉRIAU SYNTHÉTIQUE RENFORCÉ DE FIBRES ET PROCÉDÉ DE PRODUCTION

(30) Priorität: 02.09.2013 DE 102013217388
(43) Veröffentlichungstag der Anmeldung: 13.07.2016
(73) Patentinhaber: Volkswagen Aktiengesellschaft, 38440 Wolfsburg (DE)
(72) Erfinder: KHARCHI, Karim, 38165 Lehre (DE); EHLEBEN, Max, 38126 Braunschweig (DE); TÄGER, Olaf, 38126 Braunschweig (DE); NENDEL, Wolfgang, 09569 Oederan/OT Schönerstadt (DE); MEYER, Marcel, 09477 Jöhstadt (DE); HOYER, Karl-Heinz, 08258 Markneukirchen (DE)
(86) Internationale Anmeldenummer: PCT/EP2014/067624
(87) Internationale Veröffentlichungsnummer: WO 2015/028347

(56) Entgegenhaltungen:
- DE-A1-102010 041 790
- Carl Hanser Verlag ET AL: "P R O D U K T I O N", , 30. März 2011 (2011-03-30), XP055145802, Gefunden im Internet: URL:https://www.kunststoffe.de/_storage/as set/536825/storage/master/file/5966470/dow nload/Hohlkörperverbundstrukturen im Minutentakt.pdf [gefunden am 2014-10-10]

## Beschreibung

Die Erfindung betrifft ein Verfahren zur Herstellung eines, eine Krafteinleitungsstruktur aufweisenden Faser-Verbund-Kunststoffbauteils nach dem Oberbegriff des Patentanspruches 1 sowie ein solches Faser-Verbund-Kunststoffbauteil nach dem Oberbegriff des Patentanspruches 5.

Ein derartiges Faser-Verbund-Kunststoffbauteil wird im Fahrzeugbereich etwa als eine Batterieträgerwand eingesetzt, die beispielhaft in eine Rücksitzwand des Fahrzeuges integriert ist. An einer solchen Batterieträgerwand kann die Traktionsbatterie des Fahrzeuges verschraubt sein, wodurch insbesondere im Crashfall hohe Lasten auf die Schraubpunkte der Batterieträgerwand wirken.

In einem Stand der Technik ist der Materialaufbau eines solchen Faser-Verbund-Kunststoffbauteils so ausgelegt, dass es einerseits hohe Crash-Lasten aufnimmt und andererseits leichtgewichtig ist. So weist ein gattungsgemäßes Faser-Verbund-Kunststoffbauteil zumindest ein Tragblechteil, etwa ein Organoblechteil, sowie eine hinterspritzte Krafteinleitungsstruktur aus einer faserverstärkten Kunststoffmasse auf. Unter einem Organoblechteil ist in der vorliegenden Anmeldung ein Blechteil aus einem endlosfaserverstärkten, thermoplastischen Faser-Verbund-Kunststoff zu verstehen. Das Organoblechteil kann dabei aus verschiedenen Endlosfaser-Materialien, wie zum Beispiel Kohlenstoff, Basalt und verschiedenen thermoplastischen Matrixsystemen, zum Beispiel Polyamid, Polypropylen, bestehen. Im Stand der Technik wird zur Bereitstellung eines Schraubansatzes in die Krafteinleitungsstruktur fertigungstechnisch aufwändig ein Aufnahmeloch gebohrt, in das als ein Metall-Insert eine Schraubbuchse integrierbar ist, an der die Traktionsbatterie verschraubt werden kann.

Beispielhaft sind aus der DE 10 2011 014 538 B3 und aus der WO 2004/094175 A1 Verfahren zur Herstellung eines solchen Faser-Verbund-Kunststoffbauteiles bekannt.

Die Herstellung des oben beschriebenen Faser-Kunststoffbauteils mit dem zusätzlichen MetallEinleger ist fertigungstechnisch aufwändig durchführbar und daher nicht geeignet für ein großserienfähiges Fertigungsverfahren.

Aus der DE 10 2010 041 790 A1 ist ein gattungsgemäßes modulares Leichtbau-Strebenelement bekannt. Aus der Veröffentlichtung Carl Hanser Verlag ET AL: "Produktion", 30. März 2011 (2011-03.30), XP055145802 sind allgemein Hohlkörperverbundstrukturen bekannt.

Die Aufgabe der Erfindung besteht darin, ein großserienfähiges, kostengünstiges Fertigungsverfahren zur Herstellung eines, eine Krafteinleitungsstruktur aufweisenden, insbesondere zweischaligen Faser-Verbund-Kunststoffbauteils bereitzustellen, und zwar insbesondere mit integrierter, hochbelastbarer Krafteinleitung und/oder einem Korrosionsschutz.

Die Aufgabe ist durch die Merkmale des Patentanspruches 1 oder 5 gelöst. Bevorzugte Weiterentwicklungen der Erfindung sind in den Unteransprüchen offenbart.

Bei dem erfindungsgemäßen Verfahren wird allgemein zunächst ein erstes Tragblechteil, insbesondere ein Organoblechteil, als ein Einleger in eine, die Negativform des Kunststoffbauteils nachbildende Formkammer eines Spritzgusswerkzeugs eingelegt. Dies erfolgt unter Freilassung einer, die Negativform der Krafteinleitungsstruktur nachbildenden Teilkammer des Spritzgusswerkzeugs. Anschließend wird in einem Spritzschritt ein faserverstärktes Kunststoffmaterial in die noch freie Teilkammer eingespritzt, wodurch die hinterspritzte Krafteinleitungsstruktur gebildet wird. Gemäß dem Patentanspruch 1 wird zur Steigerung der Bauteilsteifigkeit und -festigkeit vor der Durchführung des Spritzschrittes zusätzlich ein Metalleinleger in die noch freie Teilkammer eingelegt. Der Metalleinleger wird dann während des Spritzschrittes vom Kunststoffmaterial umspritzt. Auf diese Weise wird während des Spritzschrittes nicht nur eine Krafteinleitungsstruktur geformt, sondern zusätzlich auch der verstärkende Metalleinleger in die Krafteinleitungsstruktur integriert.

Das oben allgemein beschriebene, erfindungsgemäße Verfahren ist in der nachfolgenden, bevorzugten Prozessfolge u. a. als ein vierter und sechster Verfahrensschritt integriert:
1. Aufheizen eines Organoblech-Zuschnitts (zum Beispiel mittels Infrarotstrahlen) auf eine Verarbeitungstemperatur;
2. Umform- und Stanzprozess zur Herstellung eines unteren Organoblech-Einlegers, vorzugsweise aus CFK, mit Montageöffnungen;
3. Zwischenheizen (zum Beispiel mit Infrarotstrahlern) zur besseren Anbindung der kurzfaserverstärkten Spritzgussmasse;
4. Einlegen zumindest eines metallischen Inserts (zum Beispiel eine Schraubbuchse) in das Spritzgusswerkzeug, Hinterspritzen des unteren Organoblech-Einlegers mit dem Kunststoffmaterial, vorzugsweise aus GFK, sowie Schaffung des Korrosionsschutzes zwischen dem metallischen Insert und den Kohlenstofffasern des unteren Organoblech-Einlegers durch Umspritzen des metallischen Inserts;
5. Umformen eines oberen Organoblech-Einlegers, vorzugsweise aus CFK, in einer externen Umformstation; sowie
6. Schweißverbindung (zum Beispiel durch Spiegelschweißen) des oberen Organoblech-Einlegers und der Krafteinleitungsstruktur, Verschweißen und Bauteilentnahme.

Mit der obigen Prozessfolge ergeben sich die folgenden Vorteile: So können thermoplastische FVK-Metall-Hybridbauteile mit einem zweischaligen Aufbau, einer hinterspritzten GFK-Rippenstruktur und der Integration von hochbelasteten Krafteinleitungselementen sowie Korrosionsschutz realisiert werden. Zudem findet der Stanzprozess bei der Organoblech-Umformung statt. Der Stanzrest wird im Werkzeug abgeführt. Ferner können metallische Krafteinleitungselemente (d.h. metallische Inserts) mit kohlenstoffverstärkten Organoblechen korrosionsfrei kombiniert werden. Außerdem können durch Infrarot-Spiegelschweißen und Aufpressen die Fügepartner Organoblech und GFK-Krafteinleitungsstruktur verschweißt werden.

Für eine zweischalige Ausführung wird ein weiteres, zweites Tragblechteil (d.h. der oben erwähnte obere Organoblech-Einleger) mit dem bereits gebildeten Kunststoffbauteil zusammengefügt. Dies kann bevorzugt in einem Spiegelschweiß-Schritt erfolgen, bei dem das zweite Tragblechteil mit dem Kunststoffbauteil stoffschlüssig verbunden wird, und zwar unter Zwischenlage des Metalleinlegers und des eingespritzten Kunststoffmaterials sowie unter Bildung eines Hohlprofils, das von der Krafteinleitungsstruktur, bevorzugt eine fachwerkartige Rippenstruktur, durchsetzt ist.

In einem besonders bevorzugten Anwendungsfall kann die Krafteinleitungsstruktur einen Schraubansatz aufweisen. Hierbei kann der Metalleinleger eine zum Beispiel zylindrische Schraubbuchse sein, die mit ihrer metallischen Stirnseite durch ein Schraubloch des Tragblechteils nach außen freigelegt ist. Bei einer solchen Konstellation ist es von Relevanz, ob aufgrund der getroffenen Materialauswahl zwischen dem Metalleinleger und den Verstärkungsfasern des Organoblechteiles ein chemisches Potential vorliegt, bei der eine unmittelbare elektrische Berührung im Hinblick auf eine vorzeitige Korrosion zu verhindern ist. In einem solchen Fall kann der Metalleinleger bevorzugt berührungsfrei gegenüber dem Tragblechteil durch die querschnittsgrößer ausgelegte Montageöffnung des Tragblechteils ragen. Der sich dadurch bildende Ringspalt zwischen der Metalleinleger-Stirnseite und dem Öffnungsrand des Schraubloches ist erfindungsgemäß mit der Kunststoffmasse gefüllt. Wobei der freie Ringspalt ein Bestandteil der, die Krafteinleitungsstruktur nachbildenden Teilkammer ist. In diesem Fall wird bei dem oben erwähnten Spritzschritt die Teilkammer, und damit auch der freie Ringspalt, mit dem Kunststoffmaterial gefüllt, wodurch eine wirkungsvolle elektrische Isolierung zwischen dem Organoblechteil und dem metallischen Einleger vorgesehen ist.

Dadurch ist ein wirkungsvoller Korrosionsschutz bereitgestellt, der beispielhaft eine Kombination aus Kohlenstofffasern im Organoblechteil und einem Aluminiummaterial des Metalleinlegers ermöglicht, ohne dass die Gefahr von Korrosion besteht. Ohne einen solchen Korrosionsschutz wäre dagegen die Materialauswahl zwischen dem Metalleinleger und dem Organoblechteil gegebenenfalls beschränkt auf Glasfasern im Organoblechteil und/oder auf einen Edelstahl-Einleger (anstelle eines Aluminium-Einlegers).

Im Hinblick auf eine weitere Erhöhung der Bauteilsteifigkeit wird eine zweischalige Ausführung des Faser-Verbund-Kunststoffbauteils gefertigt. Hierzu wird das Kunststoffbauteil mit dem zweiten Tragblechteil (zum Beispiel ebenfalls ein Organoblechteil) mit dem Kunststoffbauteil zusammengefügt. Dies erfolgt unter Zwischenlage des Metalleinlegers und des hinterspritzten Kunststoffmaterials, dessen Krafteinleitungsstruktur das ansonsten vorhandene Hohlprofil des zweischaligen Bauteils durchsetzt. Das zweite Tragblech kann bevorzugt in einem Spiegel-Schweißschritt stoffschlüssig mit dem Kunststoffbauteil verbunden werden. Anstelle einer Spiegel-Schweißung ist auch jegliche andere Schweißmethode, wie etwa Reibschweißen, möglich.

In einem, dem Spritzschritt vorgelagerten Stanzschritt kann ein Schraubloch in das erste und/oder zweite Tragblechteil gestanzt werden. Alternativ kann das Schraubloch auch mit einem heißen Dorn eingedrückt werden, um die kontinuierlichen Fasern nicht zu unterbrechen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Explosionsdarstellung ein zweischaliges Faser-Verbund-Kunststoffbauteil;
- Fig. 2: eine stark vergrößerte Teilschnittdarstellung entlang der Schnittebene I-I aus der Fig. 1 in der Zusammenbaulage des Kunststoffbauteils;
- Fig. 3a bis 3f: jeweils Verfahrensschritte zur Herstellung des in den Fig. 1 und 2 gezeigten Kunststoffbauteils; und
- Fig. 4: eine Schnittdarstellung durch das Ober- und Unterwerkzeug mit dem integrierten Stanzsystem.

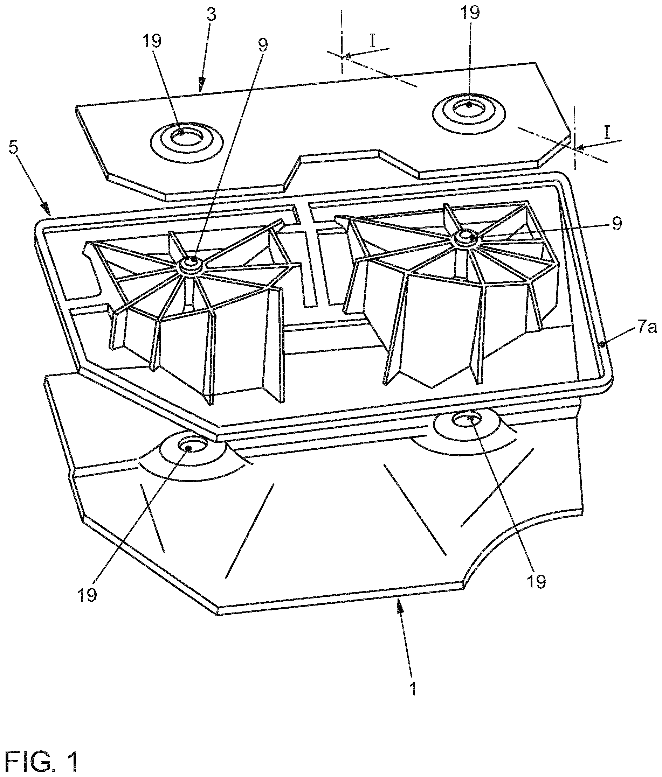

In der Fig. 1 ist ein Ausführungsbeispiel des zweischaligen Faser-Verbund-Kunststoffbauteils in einer Explosionsdarstellung gezeigt. Demzufolge ist das Kunststoffbauteil aus einem unteren Organoblech-Einleger 1 sowie einem oberen Organoblech-Einleger 3 und einer zwischengeordneten Krafteinleitungsstruktur 5 aufgebaut. Die Krafteinleitungsstruktur 5 weist fachwerkartig verteilte Rippen 7 auf, die jeweils an zwei von der Krafteinleitungsstruktur 5 umspritzte Schraubbuchsen 9 sternförmig zusammenlaufen. Die Krafteinleitungsstruktur 5 weist zudem eine spritzgegossene Umrandung 7a auf, die das Tragblechteil 1 seitlich umschließt und somit Fertigungsungenauigkeiten, die beim Umformen entstehen, ausgleicht. Ein nachträglicher Randbeschnitt des FVK-Bauteils kann daher entfallen. Die Krafteinleitungsstruktur 5 ist eine hinterspritzte, faserverstärkte Kunststoffmasse, während die beiden oberen und unteren Organoblech-Einleger 1, 3 jeweils endlosfaserverstärkte, thermoplastische Halbzeuge sind, etwa aus einem kohlenstofffaserverstärkten Kunststoff. Die Schraubbuchsen 9 sind hier beispielhaft aus einem Aluminiummaterial gefertigt.

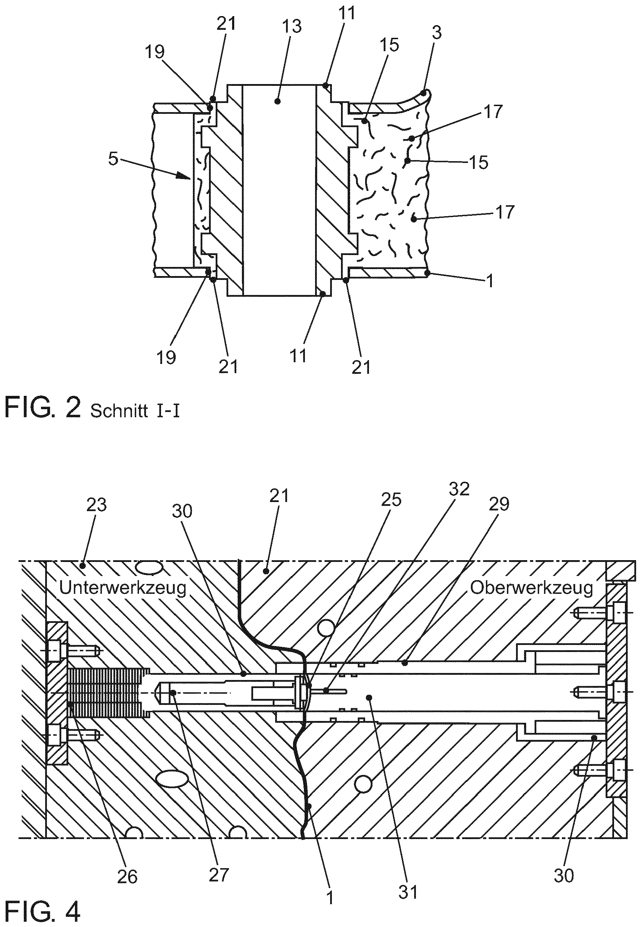

In der in der Fig. 2 gezeigten Zusammenbaulage sind die metallischen Stirnseiten 11 der Schraubbuchsen 9 jeweils stirnseitig nach oben und nach unten freigelegt. Die Schraubbuchse 9 weist gemäß der Fig. 2 einen Schraubkanal 13 mit ggf. einem Innengewinde auf. In der Fig. 2 ist die radial äußere Mantelfläche der zylindrischen Schraubbuchse 9 weitgehend vom faserverstärkten Kunststoffmaterial der Krafteinleitungsstruktur 5 umspritzt. Das faserverstärkte Kunststoffmaterial weist hier beispielhaft Glasfasern 15 auf, die in einer punktförmig dargestellten Kunststoffmatrix 17, etwa aus Polyamid, eingebettet sind.

Wie aus der Fig. 2 weiter hervorgeht, sind die beiden Stirnseiten 11 der Schraubbuchse 9 durch Montageöffnungen 19 des oberen Organoblech-Einlegers 3 und des unteren Organoblech-Einlegers 1 geführt, wobei zwischen dem durchmessergrößeren Öffnungsrand der Montageöffnungen 19 und dem Außenumfang der Schraubbuchse 9 ein mit dem Kunststoffmaterial gefüllter Ringspalt 21 vorgesehen ist. Auf diese Weise sind die Kohlenstofffasern in den Organoblech-Einlegern 1, 3 elektrisch isoliert von dem AluminiumMaterial der Schraubbuchsen 9. Das hinterspritzte Kunststoffmaterial der Krafteinleitungsstruktur 5 dient demzufolge in Doppelfunktion sowohl zur Aussteifung des Kunststoffbauteils als auch zur elektrischen Isolierung zwischen den Schraubbuchsen 9 und den Organoblech-Einlegern 1, 3.

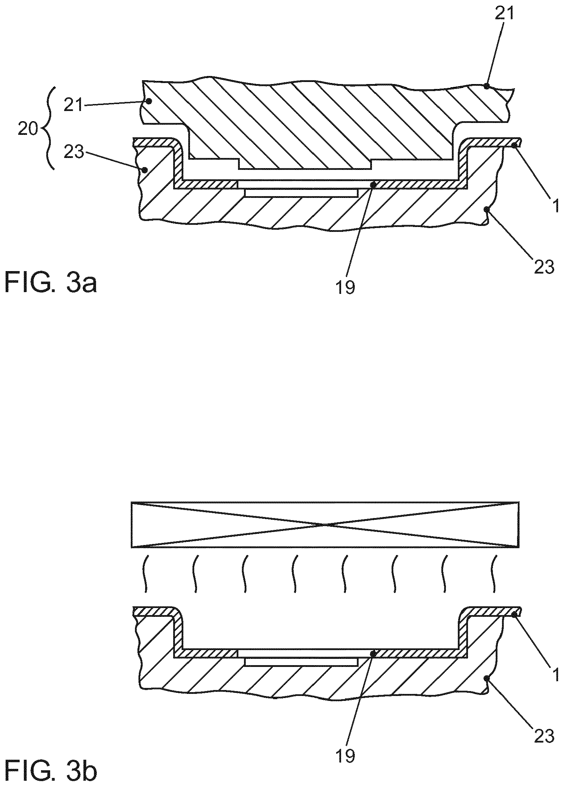

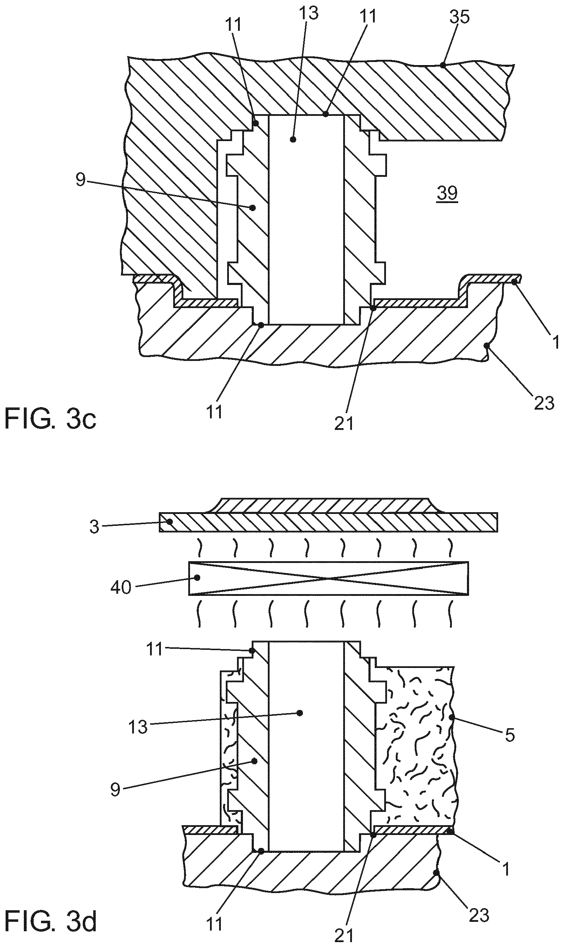

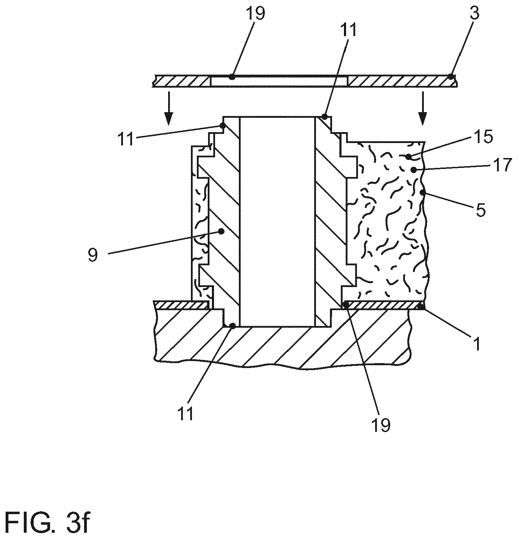

Der erfindungsgemäße Prozess zur Herstellung des in den Fig. 1 und 2 gezeigten Kunststoffbauteils setzt sich aus den nachfolgenden sechs Stufen zusammen, die anhand der Fig. 3a bis 3f beschrieben sind:
1. Aufheizen eines Organoblech-Zuschnitts mittels Infrarotstrahlen auf die Verarbeitungstemperatur (nicht in den Figuren gezeigt);
2. Umform- und Stanzprozess zur Herstellung des unteren Organoblech-Einlegers 1 mit den Montageöffnungen 19, wie es schematisch in der Fig. 3a gezeigt ist;
3. Zwischenheizen mit Infrarotstrahlern zur besseren Anbindung der glasfaserverstärkten Spritzgussmasse gemäß der Fig. 3b;
4. Einlegen der Schraubbuchse 9 als ein metallisches Insert in das Formwerkzeug, wie es anhand der Fig. 3c veranschaulicht ist, Hinterspritzen des unteren Organoblech-Einlegers 1 mit dem Kunststoffmaterial sowie Schaffung des Korrosionsschutzes zwischen den Schraubbuchsen 9 und den Kohlenstofffasern des unteren Organoblech-Einlegers 1 durch Umspritzen der Schraubbuchsen 9;
5. Umformen des oberen Organoblech-Einlegers 3, vorzugsweise aus CFK, in einer nicht dargestellten externen Umformstation; sowie
6. Spiegelschweißen (vgl. Fig. 3d) des oberen Organoblech-Einlegers 3 und der Krafteinleitungsstruktur 5 mit Hilfe einer Spiegelschweißanlage 40, Verschweißen (Fig. 3f) und Bauteilentnahme.

Der Herstellungsprozess beinhaltet im Großserienbetrieb vier gleichartige Unterwerkzeuge, zwei verschiedenartige Oberwerkzeuge und zwei Heizstationen, die in einer Rundtischanlage integriert sind. Ferner werden eine weitere externe Heizstation und ein externes Ober- und Unterwerkzeug zur Umformung des oberen Organoblech-Einlegers 3 benötigt. Alle vier Positionen der Rundtischanlage verarbeiten parallel die Organoblech-Einleger 1 und 3, so dass die Zykluszeit durch die Einzel-Fertigungsschritte bestimmt wird. Die Ziel-Zykluszeit liegt unter einer Minute.

Das erfindungsgemäße Fertigungsverfahren wird vorteilhaft auf einer Spritzgieß-Rundtischanlage mit einem drehbaren Rundtisch realisiert. Der drehbare Rundtisch ermöglicht es, vier Fertigungsstationen zu integrieren und separat anzusteuern.

Die zur Bildung der Organoblech-Einleger 1, 3 erforderlichen Zuschnitte werden vorzugsweise im Wasserstrahlschneid-Verfahren aus plattenförmigen Halbzeugen herausgeschnitten.

Nach einer anschließenden Konditionierung - Trocknung - wird der jeweilige Organoblech-Zuschnitt mit Infrarotstrahlern oberhalb des Schmelzpunktes der thermoplastischen Matrix aufgeheizt (nicht dargestellt). Über ein Roboter-Greifer-System, zum Beispiel Nadelgreifer, wird dann das Organoblech aus dem Ofen in ein Preform-Werkzeug 20 transportiert und positioniert, das gemäß der Fig. 3a ein Oberwerkzeug 21 und ein Unterwerkzeug 23 aufweist. Die Positionierung des Organoblech-Zuschnitts im Preform-Werkzeug 20 erfolgt beispielhaft mit einem aus vier Niederhaltern bestehenden System.

Dies ermöglicht eine exakte Positionierung des Organoblechs im Umformwerkzeug 20 und somit eine reproduzierbare Umformung der Organobleche, um eine robuste Fertigung realisieren zu können. Im Preform-Oberwerkzeug 21 können vier Aussparungen integriert sein, die zur Aufnahme von Niederhaltern beim Werkzeugschließen dienen.

Zudem ist das Preform-Werkzeug 20 so ausgelegt, dass ein Stanzprozess in die Umformung der endlosfaserverstärkten, thermoplastischen Halbzeuge, d.h. der Organobleche, integriert ist.

In der Fig. 4 ist ein Schnitt durch das Ober- und Unterwerkzeug 21, 23 mit dem integrierten Stanzsystem gezeigt. Mit dem Stanzsystem können sowohl die Organbleche kurz vor dem Werkzeugschließen gestanzt werden, als auch der Stanzrest 25 im Oberwerkzeug 21 abgeführt werden. Beim Öffnen des Werkzeugs 20 wird der Stanzrest 25 durch die, auf einer Tellerfeder 26 abgestützten Gasdruckfeder 27 mit in das Oberwerkzeug 21 gedrückt. Durch die, über die Druckfeder 30 gefederte Hülse 29 im Oberwerkzeug 21 wird das Bauteil vom unteren Schneidstempel 30 heruntergeschoben und verbleibt positionsgenau im Preform-Unterwerkzeug 23. Auf dem im oberen Schneidstempel 31 verbleibenden Stanzrest 25 wirkt zusätzlich ein von der Unterdruckdüse 32 erzeugter Unterdruck, so dass während dem vollständigen Öffnen des Werkzeugs 20 der Stanzrest 25 mitgeführt wird.

Im weiteren Prozessverlauf verfährt lediglich das Preform-Unterwerkzeug 23 im Uhrzeigersinn auf dem Rundtisch in die nächste Station. Währenddessen wird der Stanzrest 25 in einem auf dem Drehtisch befestigten Behälter aufgefangen. Dies geschieht durch Aufheben des wirkenden Unterdrucks im oberen Schneidstempel 31.

Gemäß der Fig. 3b wird die Oberfläche des umgeformten und gestanzten Organoblech-Einlegers 1 mit Infrarotstrahlern aufgeschmolzen, um eine optimale Anbindung der zu hinterspritzenden vorzugsweise aus kurzglasfaserverstärkter Spritzgussmasse bestehenden Krafteinleitungsstruktur 5 zu ermöglichen.

Nach dem Zwischenheizen dreht das Preform-Unterwerkzeug 21 in die nachfolgende Station (Fig. 3c). Dort wird eine Schraubbuchse 9 als ein metallisches Insert robotergesteuert auf nicht dargestellte Aufsteckstifte im Spritzgieß-Oberwerkzeug 35 aufgesteckt. Diese werden vorzugsweise mit Fixierkugeln, die in die Aufsteckstifte integriert sind, gegen ein Herunterrutschen gesichert. Das Spritzgieß-Oberwerkzeug 35 weist nicht dargestellte Auswerfer und die Aufsteckstifte auf. Die Auswerfer erlauben das Herausdrücken des hinterspritzten unteren Organoblech-Enlegers 1 aus dem Spritzgieß-Oberwerkzeug 35.

Das Spritzgieß-Oberwerkzeug 35 begrenzt in der Fig. 3c eine noch freie Teilkammer 39, die die Negativform der Krafteinleitungsstruktur 5 nachbildet. Im nachfolgenden Spritzgießen wird das das faserverstärkte Kunststoffmaterial zur Bildung der Krafteinleitungsstruktur 5 in die freie 39 Teilkammer eingespritzt.

Wie bereits weiter oben angedeutet, herrscht zwischen den Kohlenstofffasern der Organoblech-Einleger 1 und 3 sowie der aus Aluminium gefertigten Schraubbuchse 9 eine elektrochemische Spannungsdifferenz. Es besteht daher die Gefahr, dass beim Kontakt der Kohlenstofffasern in dem Organoblech-Einlegern 1 und 3 mit der metallischen Schraubbuchse 9 korrosives Verhalten auftritt. Dies wurde bei der Integration der Schraubbuchse 9 beachtet und durch das Umspritzen mit dem vorzugsweise kurzglasfaserverstärkten Kunststoff, zum Beispiel PP/GF oder PA/GF verhindert.

Auf diese Weise ergibt sich ein Faser-Verbund-Kunststoff-Hybridbauteil mit einem integrierten Korrosionsschutz. Aus den Schnittdarstellungen wird ersichtlich, dass die metallischen Inserts (d.h. die Schraubbuchsen 9) komplett durch die kurzglasfaserverstärkte Spritzgussmasse umschlossen sind und die Organobleche aus CFK in der erfindungsgemäßen Ausführung keinen direkten Kontakt mit den metallischen Inserts mehr haben.

Die Kontur des oberen Organoblech-Einlegers 3, inklusive der zylindrischen Ausschnitte, wird im Wasserstrahlschneid-Verfahren aus den ebenen Halbzeugplatten ausgeschnitten. Der obere Einleger 3 wird in einer externen Vorrichtung vorgeformt und gemäß der Fig. 3f dem Prozess mit einem Roboter-Handlings-System zugeführt.

Gemäß der Fig. 3f verfährt eine nicht gezeigte Spiegelschweißeinheit über einen Druckluftzylinder zwischen den oberen Organoblech-Einleger 3 und die bereits im vorherigen Schritt hinterspritzte Krafteinleitungsstruktur 5. Die zum Aufschmelzen notwendige Wärmeenergie wird vorzugsweise mit Infrarotstrahlung aufgebracht. Eine zeitlich abgestimmte Prozesssteuerung ermöglicht das simultane Aufschmelzen der Matrix im oberen Organoblech-Einleger 3 und der Krafteinleitungsstruktur 5, so dass das Verschweißen der beiden Fügepartner durch robotergesteuertes Anpressen erfolgen kann.

Nachfolgend sind nochmals die Vorteile der Erfindung gegenüber dem Stand der Technik aufgelistet: So werden mit dem erfindungsgemäßen Prozess thermoplastische FVK-Metall-Hybridbauteile mit einem zweischaligen Aufbau, einer hinterspritzten GFK-Rippenstruktur und der Integration von hochbelasteten Krafteinleitungselementen sowie Korrosionsschutz realisiert. Im erfindungsgemäßen Prozess findet der Stanzprozess bei der Organoblech-Umformung statt. Der Stanzrest wird im Werkzeug abgeführt. Durch den erfindungsgemäßen Prozess können metallische Krafteinleitungselemente (d.h. metallische Inserts 9) mit kohlenstoffverstärkten Organoblechen korrosionsfrei kombiniert werden. Außerdem können durch Infrarot-Spiegelschweißen und Aufpressen die Fügepartner Organoblech und GFK-Krafteinleitungsstruktur 5 verschweißt werden.

Durch den erfindungsgemäßen Prozess können zudem funktionale zweischalige FVK-Hybridbauteile hergestellt werden, die im Bereich der hochbelasteten Strukturbauteile und Karosserie Anwendung finden können. Der Prozessablauf über eine Rundtischanlage ermöglicht eine großserientaugliche Fertigung von FVK-Metall-Hybridbauteilen mit Zykluszeiten unterhalb einer Minute.

## Patentansprüche

1. Verfahren zur Herstellung eines, eine Krafteinleitungsstruktur (5) aufweisenden Faser-Verbund-Kunststoffbauteils, bei dem ein erstes Tragblechteil (1), insbesondere ein Organoblechteil, als ein Einleger in eine die Negativform des Kunststoffbauteils nachbildende Formkammer eines Spritzgusswerkzeugs eingelegt wird, und zwar unter Freilassung einer die Negativform der Krafteinleitungsstruktur (5) nachbildenden Teilkammer (39) des Spritzgusswerkzeugs, und in einem Spritzschritt zur Bildung der Krafteinleitungsstruktur (5) ein faserverstärktes Kunststoffmaterial (15, 17) in die freie Teilkammer (39) eingespritzt wird, wobei zur Steigerung der Bauteilsteifigkeit und - festigkeit der Krafteinleitungsstruktur (5) vor der Durchführung des Spritzschritts ein Metalleinleger (9) in die noch freie Teilkammer (39) eingelegt wird und im Spritzschritt vom Kunststoffmaterial (15, 17) umspritzt wird, **dadurch gekennzeichnet, dass** für eine zweischalige Ausführung ein zweites Tragblechteil (3) mit dem bereits gebildeten Kunststoffbauteil zusammengefügt wird, und zwar unter Zwischenlage des Metalleinlegers (9) und des eingespritzten Kunststoffmaterials (15, 17) sowie unter Bildung eines Hohlprofils, und dass das zweite Tragblechteil (3) durch Spiegelschweißen oder dergleichen mit dem Kunststoffbauteil verbunden wird, wobei in einem Verfahrensschritt eine Montageöffnung (19) in das erste Tragblechteil (1) eingebracht wird, durch das der Metalleinleger (9) nach außen freigelegt wird, und zwar unter Bildung eines freien Ringspalts (21) berührungsfrei zum Tragblechteil (1) und der freie Ringspalt (21) Bestandteil der die Krafteinleitungsstruktur (5) nachbildenden Teilkammer (39) ist, und dass beim nachfolgenden Spritzschritt der freie Ringspalt (21) unter elektrischer Isolierung des Metalleinlegers (9) und des Tragblechteils (1) mit dem Kunststoffmaterial (15, 17) gefüllt wird.

2. Verfahren nach Anspruch 1, **dadurch gekennzeichnet, dass** in einem weiteren Verfahrensschritt eine Montageöffnung (19) in das zweite Tragblechteil (3) eingebracht wird, in das die Krafteinleitungsstruktur (5) einragt, und zwar insbesondere der Metalleinleger (9) unter Zwischenlage der umspritzten Kunststoffmasse (15, 17), wodurch der Metalleinleger (9) und das zweite Tragblechteil (3) elektrisch voneinander isoliert sind.

3. Verfahren nach einem der vorhergehenden Ansprüche, **dadurch gekennzeichnet, dass** das erste Tragblechteil (1) und/oder das zweite Tragblechteil (3) in Thermoform-Schritten vorgeformt werden, und/oder dass die beiden Tragblechteile (1,3) aus einem endlosfaserverstärkten Thermoplast hergestellt sind, dessen Endlos-Fasermaterial bevorzugt Kohlenstoff ist, sowie das Kunststoffmaterial (15, 17) aus einem kurz- oder langfaserverstärkten Thermoplast hergestellt ist, etwa GFK oder dergleichen, wodurch der Metalleinleger (9) von den Tragblechteilen (1, 3) elektrisch isolierbar ist.

4. Verfahren nach einem der vorhergehenden Ansprüche, **gekennzeichnet durch** die folgenden Verfahrensschritte:
- Aufheizen eines Organoblech-Zuschnitts, insbesondere mittels Infrarotstrahlen oder dergleichen, auf eine Verarbeitungstemperatur;
- Umform- und Stanzprozess zur Herstellung eines unteren Organoblech-Einlegers (1) mit Montageöffnungen (19);
- Zwischenheizen, insbesondere mit Infrarotstrahlern oder dergleichen, zur besseren Anbindung der faserverstärkten Spritzgussmasse (15, 17), etwa aus GFK oder dergleichen;
- Aufstecken des zumindest einen Metalleinlegers (9) in das Spritzgusswerkzeug, Hinterspritzen des unteren Organoblech-Einlegers (1) mit dem Kunststoffmaterial sowie Schaffung des Korrosionsschutzes zwischen dem Metalleinleger (9) und den Kohlenstofffasern des unteren Organoblech-Einlegers (1) durch Umspritzen des Metalleinlegers (9);
- Umformen des oberen Organoblech-Einlegers (3) in einer externen Umformstation; sowie
- stoffschlüssige Verbindung, insbesondere Schweißverbindung, des oberen Organoblech-Einlegers (3) und der Krafteinleitungsstruktur (5) und Bauteilentnahme.

5. Faser-Verbund-Kunststoffbauteil, das mit einem Verfahren gemäß einem der vorhergehenden Ansprüche hergestellt ist, mit zumindest einem Tragblechteil (1, 3), insbesondere ein Organoblechteil, und einer hinterspritzten Krafteinleitungsstruktur (5) aus einer faserverstärkten Kunststoffmasse (17), **dadurch gekennzeichnet, dass** das Bauteil einen Metalleinleger (9) aufweist, der von der Kunststoffmasse (15, 17) zumindest teilweise umspritzt ist.

6. Faser-Verbund-Kunststoffbauteil nach Anspruch 5, **dadurch gekennzeichnet, dass** der Metalleinleger (9) eine insbesondere zylindrische Schraubbuchse ist, die mit ihrer metallischen Stirnseite (11) durch eine Montageöffnung (19) des Tragblechteils (1, 3) nach außen freigelegt ist, und dass insbesondere der Metalleinleger (9) berührungsfrei gegenüber dem Tragblechteil (1, 3) durch die querschnittsgrößere Montageöffnung (19) ragt, und dass insbesondere der Ringspalt (21) zwischen der Metalleinleger-Stirnseite (11) und dem Öffnungsrand des Schraubloches (19) mit der Kunststoffmasse (15, 17) gefüllt ist, um ein korrosives Verhalten zu verhindern.

7. Faser-Verbund-Kunststoffbauteil nach Anspruch 6, **dadurch gekennzeichnet, dass** die gegenüberliegende Metalleinleger-Stirnseite (11) ebenfalls berührungsfrei durch ein Schraubloch (19) eines zweiten Tragblechteils (3) ragt und dass insbesondere der Ringspalt (21) zwischen der gegenüberliegenden Metalleinleger-Stirnseite (11) und dem Öffnungsrand des Schraubloches (19) des zweiten Tragblechteils (3) mit der Kunststoffmasse (15, 17) gefüllt ist.

## Claims

1. Method for the production of a fibre-composite plastic component that has a force-introduction structure (5), in which fibre-composite plastic component a first support sheet-metal part (1), in particular an organic sheet part, as an insert is inserted into a moulding chamber of an injection-moulding tool that represents the negative shape of the plastic component, specifically while vacating a part-chamber (39) of the injection-moulding tool that represents the negative shape of the force-introduction structure (5), and in an injection step for forming the force-introduction structure (5) a fibre-reinforced plastic material (15, 17) is injected into the vacant part-chamber (39), wherein for increasing the component rigidity and component strength of the force-introduction structure (5) prior to carrying out the injection step, a metal insert (9) is inserted into the as yet vacant part-chamber (39), said metal insert (9) in the injection step being insert moulded in the plastic material (15, 17), **characterized in that** for a dual-shell embodiment a second support sheet-metal part (3) is joined with the already formed plastic component, specifically by way of the intermediate tier of the metal insert (9) and of the injected plastic material (15, 17) and while forming a hollow profile, and **in that** the second support sheet-metal part (3) is connected to the plastic component by mirror-imaged welding or the like, wherein in a method step an assembly opening (19) is incorporated in the first support sheet-metal part (1), the metal insert (9) being externally exposed by way of said assembly opening (19), specifically in a non-contacting manner in relation to the support sheet-metal part (1) while forming a free annular gap (21), the free annular gap (21) being a component part of the part-chamber (39) that represents the force-introduction structure (5), and **in that** in the subsequent injection step the free annular gap (21) is filled with the plastic material (15, 17) while electrically isolating the metal insert (9) and the support sheet-metal part (1).

2. Method according to Claim 1, **characterized in that** in a further method step an assembly opening (19) into which the force-introduction structure (5), in particular the metal insert (9), protrudes is incorporated in the second support sheet-metal part (3) specifically by way of the intermediate tier of the insert-moulded plastic compound (15, 17), the metal insert (9) and the second support sheet-metal part (3) on account thereof being electrically isolated from one another.

3. Method according to one of the preceding claims, **characterized in that** the first support sheet-metal part (1) and/or the second support sheet-metal part (3) are pre-formed in thermoforming steps, and/or **in that** the two support sheet-metal parts (1, 3) are produced from an endless fibre-reinforced thermoplastic material, the endless fibre material of the latter preferably being carbon, and the plastic material (15, 17) being produced from a short or long fibre-reinforced thermoplastic material such as GRP or the like, the metal insert (9) on account thereof being able to be electrically isolated from the support sheet-metal parts (1, 3).

4. Method according to one of the preceding claims, **characterized by** the following method steps:
- heating an organic sheet blank, in particular by means of infrared rays or the like, to a processing temperature;
- forming and punching process for producing a lower organic sheet insert (1) having assembly openings (19);
- intermediate heating, in particular by way of infrared radiators or the like, for improved bonding of the fibre-reinforced injection-moulding compound (15, 17) for example made from GRP or the like;
- fitting the at least one metal insert (9) in the injection-moulding tool, back-injection moulding the lower organic sheet insert (1) with the plastic material, and establishing the corrosion protection between the metal insert (9) and the carbon fibres of the lower organic sheet insert (1) by insert moulding the metal insert (9);
- forming the upper organic sheet insert (3) in an external forming station; and
- connecting the upper organic sheet insert (3) and the force-introduction structure (5) in a materially integral manner, in particular by way of a welded connection, and removing the components.

5. Fibre-composite plastic component which is produced by a method according to one of the preceding claims, having at least one support sheet-metal part (1, 3), in particular an organic sheet part, and a back-injection moulded force-introduction structure (5) made from a fibre-reinforced plastic compound (17), **characterized in that** the component has a metal insert (9) which is partially insert moulded in the plastic compound (15, 17).

6. Fibre-composite plastic component according to Claim 5, **characterized in that** the metal insert (9) is an in particular cylindrical screw sleeve which by way of the metallic end side (11) thereof is externally exposed by way of an assembly opening (19) of the support sheet-metal part (1, 3), and **in that** in particular the metal insert (9) in a non-contacting manner in relation to the support sheet-metal part (1, 3) protrudes through the assembly opening (19) of a comparatively larger cross-sectional size, and **in that** in particular the annular gap (21) between the metal-insert end side (11) and the opening periphery of the screw hole (19) is filled with the plastic compound (15, 17) in order to prevent a corrosive behaviour.

7. Fibre-composite plastic component according to Claim 6, **characterized in that** the opposite metal-insert end side (11) in a likewise non-contacting manner protrudes through a screw hole (19) of a second support sheet-metal part (3), and **in that** in particular the annular gap (21) between the opposite metal-insert end side (11) and the opening periphery of the screw hole (19) of the second support sheet-metal part (3) is filled with the plastic compound (15, 17).

## Revendications

1. Procédé de fabrication d'un composant en plastique composite renforcé par des fibres présentant une structure d'introduction de force (5), dans lequel une première partie porteuse en tôle (1), en particulier une partie en tôle organique, est insérée sous forme d'insert dans une chambre de moulage d'un outil de moulage par injection reproduisant le moule négatif du composant en plastique, à savoir en laissant libre une chambre partielle (39) de l'outil de moulage par injection reproduisant la forme négative de la structure d'introduction de force (5), et, dans une étape d'injection pour former la structure d'introduction de force (5), un matériau en plastique renforcé par des fibres (15, 17) est injecté dans la chambre partielle libre (39), et, pour augmenter la rigidité et la solidité du composant de la structure d'introduction de force (5) avant la mise en oeuvre de l'étape d'injection, un insert métallique (9) étant introduit dans la chambre partielle encore libre (39) et étant surmoulé au cours de l'étape d'injection du matériau en plastique (15, 17), **caractérisé en ce que** pour une réalisation à deux coques, une deuxième partie porteuse en tôle (3) est assemblée au composant en plastique déjà formé, à savoir en interposant l'insert métallique (9) et le matériau en plastique injecté (15, 17) et en formant un profilé creux, et **en ce que** la deuxième partie porteuse en tôle (3) est connectée au composant en plastique par soudage au miroir ou similaire, dans une étape de procédé, une ouverture de montage (19) étant pratiquée dans la première partie porteuse en tôle (1) à travers laquelle l'insert métallique (9) est exposé vers l'extérieur, à savoir en formant une fente annulaire libre (21) sans contact avec la partie porteuse en tôle (1), et la fente annulaire libre (21) faisant partie de la chambre partielle (39) reproduisant la structure d'introduction de force (5), et **en ce que** lors de l'étape d'injection subséquente, la fente annulaire libre (21) est remplie avec le matériau en plastique (15, 17) en isolant électriquement l'insert métallique (9) et la partie porteuse en tôle (1).

2. Procédé selon la revendication 1, **caractérisé en ce que** dans une étape de procédé supplémentaire, une ouverture de montage (19) est pratiquée dans la deuxième partie porteuse en tôle (3) dans laquelle pénètre la structure d'introduction de force (5), à savoir notamment l'insert métallique (9), en interposant la masse en plastique surmoulée (15, 17), de sorte que l'insert métallique (9) et la deuxième partie porteuse en tôle (3) soient isolés électriquement l'un de l'autre.

3. Procédé selon l'une quelconque des revendications précédentes, **caractérisé en ce que** la première partie porteuse en tôle (1) et/ou la deuxième partie porteuse en tôle (3) sont préformées dans des étapes de thermoformage, et/ou **en ce que** les deux parties porteuses en tôle (1, 3) sont fabriquées à partir d'un matériau thermoplastique renforcé par des fibres sans fin, dont le matériau à base de fibre sans fin est de préférence du carbone, et le matériau en plastique (15, 17) est fabriqué à partir d'un matériau thermoplastique renforcé par des fibres courtes ou longues, par exemple du GFK ou similaire, de sorte que l'insert métallique (9) puisse être isolé électriquement des parties porteuses en tôle (1, 3).

4. Procédé selon l'une quelconque des revendications précédentes, **caractérisé par** les étapes de procédé suivantes :
- chauffage d'une pièce découpée en tôle organique, en particulier par rayonnement infrarouge ou similaire, à une température de traitement ;
- processus de formage et d'estampage pour fabriquer un insert en tôle organique inférieur (1) avec des ouvertures de montage (19) ;
- chauffage intermédiaire, en particulier par rayonnement infrarouge ou similaire, pour améliorer la liaison de la masse de moulage par injection renforcée par des fibres (15, 17), constituée par exemple de GFK ou similaire ;
- enfichage de l'au moins un insert métallique (9) dans l'outil de moulage par injection, moulage par injection arrière de l'insert en tôle organique inférieur (1) avec le matériau en plastique et réalisation de la protection contre la corrosion entre l'insert métallique (9) et les fibres de carbone de l'insert en tôle organique inférieur (1) par surmoulage de l'insert métallique (9) ;
- formage de l'insert en tôle organique supérieur (3) dans un poste de formage externe ; et
- connexion par liaison de matière, en particulier connexion par soudage, de l'insert en tôle organique supérieur (3) et de la structure d'introduction de force (5) et enlèvement des composants.

5. Composant en plastique composite renforcé par des fibres, fabriqué par un procédé selon l'une quelconque des revendications précédentes, comprenant au moins une partie porteuse en tôle (1, 3), en particulier une partie en tôle organique, et une structure d'introduction de force moulée par injection arrière (5), constituée d'une masse de plastique renforcée par des fibres (17), **caractérisé en ce que** le composant présente un insert métallique (9) qui est au moins en partie surmoulé avec la masse en plastique (15, 17).

6. Composant en plastique composite renforcé par des fibres selon la revendication 5, **caractérisé en ce que** l'insert métallique (9) est une douille filetée notamment cylindrique, qui est exposée vers l'extérieur par son côté frontal métallique (11) à travers une ouverture de montage (19) de la partie porteuse en tôle (1, 3), et **en ce que** notamment l'insert métallique (9) pénètre sans contact par rapport à la partie porteuse en tôle (1, 3) à travers l'ouverture de montage (19) de plus grande section transversale et **en ce que** notamment la fente annulaire (21) entre le côté frontal de l'insert métallique (11) et le bord d'ouverture du trou de vissage (19) est remplie avec la masse en plastique (15, 17), afin d'éviter un comportement corrosif.

7. Composant en plastique composite renforcé par des fibres selon la revendication 6, **caractérisé en ce que** le côté frontal de l'insert métallique opposé (11) pénètre également sans contact à travers un trou fileté (19) d'une deuxième partie porteuse en tôle (3) et **en ce que** notamment la fente annulaire (21) entre le côté frontal de l'insert métallique opposé (11) et le bord d'ouverture du trou fileté (19) de la deuxième partie porteuse en tôle (3) est remplie avec la masse en plastique (15, 17).
